Europäisches Patentamt

European Patent Office

Office européen des brevets

(11) Publication number: **0 014 525**
A1

# EUROPEAN PATENT APPLICATION

(21) Application number: **80300116.3**

(22) Date of filing: **14.01.80**

(51) Int. Cl.³: **B 60 R 1/10**

(30) Priority: **24.01.79 GB 7902583**

(43) Date of publication of application:
**20.08.80 Bulletin 80/17**

(84) Designated Contracting States:
**DE FR GB IT**

(71) Applicant: **Swain, Mark**
**56 Carlton Road**
**Rugby, CV22 7PD(GB)**

(71) Applicant: **Bemand, Barrie Vernon**
**345 Dunchurch Road**
**Rugby, CV22 6HT(GB)**

(72) Inventor: **Swain, Mark**
**56 Carlton Road**
**Rugby, CV22 7PD(GB)**

(72) Inventor: **Bemand, Barrie Vernon**
**345 Dunchurch Road**
**Rugby, CV22 6HT(GB)**

(74) Representative: **Cowan, David Robert et al,**
**WALFORD AND HARDMAN BROWN Trinity House Hales**
**Street**
**Coventry CV1 1NP West Midlands(GB)**

(54) Forward viewing aid for vehicle drivers.

(57) A forward viewing aid for vehicle drivers is intended particularly for drivers driving on the other side of the road to that for which their vehicles are equipped.

It consists of a pair of mirrors (13, 14) arranged side by side so that the driver extends his field of view to see around obstructions ahead of the vehicle. One mirror (13) is a forward-facing mirror and reflections from this mirror are transmitted to the other mirror (14) which faces the driver.

In one arrangement the mirrors are in a box-like assembly supported adjustably on a stem (11) which is in turn mounted on a bracket (12) clamped to the vehicle.

To provide for the bracket (12) to be readily detached from the vehicle, there is a clamping arrangement by which the bracket (12) is only removable on lifting the vehicle bonnet.

FIG.1

EP 0 014 525 A1

## FORWARD VIEWING AID FOR VEHICLE DRIVERS

This invention relates to a forward viewing aid for vehicle drivers.

Vehicle driver viewing aids in the form of mirrors are known which give a rearward view to the vehicle driver and these mirrors take various forms. For example, the mirrors may be mounted within the vehicle or externally on the forward wings or the doors. Such mirrors are also known which are mounted on extensions or which are in the form of periscopes to enable the driver to see around trailers or caravans.

It has also been proposed to provide a mirror located within the vehicle whereby a forward view can be achieved but this mirror has not proved popular due to the need to locate it away from the driver's normal line of vision. However, a need for forward-viewing aids for vehicle drivers exists especially when a vehicle travels on the opposite side of the road to that for which it is equipped, for example, a vehicle equipped with a right-hand side driving position which is driven on the right hand side of the road. In such a case the driver must move his vehicle towards the crown of the road in order to see past a vehicle in front and to determine whether the road is clear for overtaking. This procedure is hazardous, as is a similar procedure when it is necessary for the driver to pull out to see past a large preceding vehicle when in the usual driving position.

An object of the invention is to provide a forward viewing aid for vehicle drivers which enables a vehicle driver to have a wider field of vision in the forward direction than is possible from the driving position when unaided.

According to one aspect of the invention a forward viewing aid for vehicle drivers comprises two reflecting elements, means for mounting the reflecting elements in juxtaposition relative to one another such that an image ahead of the vehicle received by one reflecting element is reflected from such element to the other reflecting element and the image can be viewed directly by the driver as a reflection from said other reflecting element.

Preferably the planes of the reflecting elements are arranged at an acute angle in the range 14-20$^{o}$ to each other, and said one reflecting element receiving the image has a convex reflecting surface.

Conveniently the radius of said one reflecting element is in the range 1500-4000 mm and said other reflecting element for viewing the image has a flat reflecting surface.

According to another aspect of the invention a mounting bracket for vehicles comprises an upper part to which a device to be mounted is attachable, the upper part having a surface arranged to engage a portion of the vehicle adjacent an edge of said portion, a lower part carried on the upper part and arranged to locate around said edge to lie opposite said surface and adjustment means interconnecting the upper and lower parts for effecting relative movement of the parts to clamp the parts on said portion of the vehicle, the arrangement being such that the upper and lower parts are clampable around the edge of a bonnet member of the vehicle when the bonnet is raised and cannot be released when the bonnet is lowered.

Further features of the invention will appear from the following description of embodiments of the invention given by way of example only and with reference to the drawings in which:

Fig. 1 is a perspective view of one embodiment of vehicle forward viewing aid,

Fig. 2 is a perspective view of part of the system of Fig. 1 showing the arrangement of mirrors and the mounting means for the mirrors to an enlarged scale,

Fig. 3 is a diagrammatic view of the light path through the mirror system of Fig. 2,

Fig. 4 is an elevation of the mounting arrangement of the embodiment of Figs. 1-3, and

Fig. 5 is a perspective view of a further embodiment of vehicle mirror system.

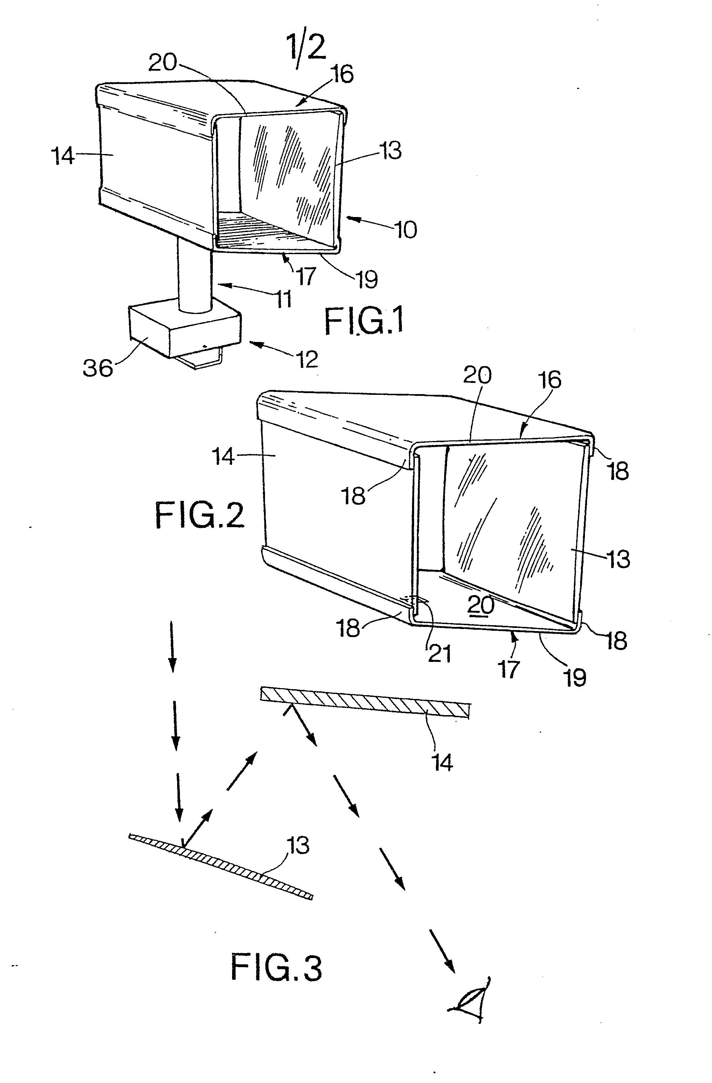

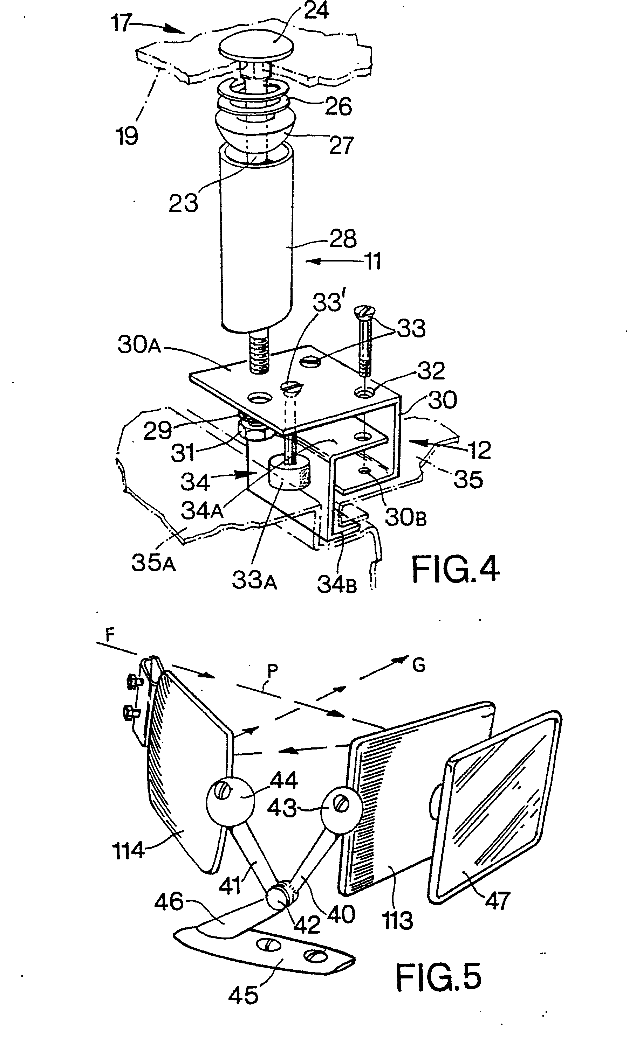

Referring to the drawings and firstly to Figs. 1-4, a forward viewing aid for vehicle drivers comprising mirrors is illustrated. The aid in this case includes a mirror assembly 10, a mounting stem 11 and a mounting bracket 12 for mounting the assembly on a vehicle (not shown).

The mirror assembly 10 includes two mirrors 13 and 14 of which one 13 is termed the forward facing mirror and it is the mirror 13 which receives an image from ahead of the vehicle to be viewed by the driver. The other mirror 14 is termed the rearward facing mirror which reflects the image on the forward facing mirror 13 to the driver. The mirrors 13 and 14 are arranged in juxtaposition and in fixed overlapping relationship to one another and, to enable the driver to see past obstructions to his normal line of vision, the mirrors have their planes inclined to one another at an angle of 10-20$^{o}$, as more clearly seen in Fig. 3.

The forward facing mirror 13 has a reflecting surface of convex shape having a focal length in the range 1550-4000 mm typically 2150 mm. The provision of a convex mirror widens the field of view of the assembly. The rearward facing mirror 14 has a flat reflecting surface.

Each of the mirrors 13 and 14 is of generally rectangular shape and the mirrors are preferably formed of glass with a reflecting surface applied to one side. Alternatively the reflecting surfaces may be obtained by other means such as prisms or polished metal.

The mirrors 13 and 14 are mounted between upper and lower mounting members 16 and 17 which are each of generally U-shape. The assembly 10 is generally in the shape of an open-ended box, the limbs 18 of the U-shaped members 16 and 17 being secured to the rear of the mirrors 13 and 14 and the bases 19 and 20 of the members 16 and 17 forming the upper and lower sides of the box.

In the base 19 of the member 16 a hole 21 is formed through which a bolt 23 of the mounting stem 11 is located. The head 24 of the bolt engages the upper side of the base 19 and the bolt extends downwardly so that its lower end is located in the bracket 12.

Around the upper end of the bolt 23 and below the base 19 is a compression spring 26 which is engaged at its lower end by a collar 27 having a flat upper surface and a hemi-spherical lower surface. Around the bolt 23 below the collar is a tube 28, the upper circular end of which engages the hemi-spherical surface of the collar.

The arrangement of the stem 11 enables the mirror assembly to be adjustable relative to the stem about the axis of the bolt 23 and about the axis of the hemi-spherical surface to enable the driver to make adjustments to give the desired field of view.

The lower end of the bolt 23 engages through a hole 29 in a member 30 of the bracket 12 and is secured in place by a nut 31. The bracket member 30 is of generally U-shape and is directed generally horizontally so that the top limb 30A of the U contains the hole 29 for the bolt 23 and a further two holes 32, the holes 29 and 32 being unthreaded and the holes 32 being countersunk to receive the heads of clamping bolts 33. A further bolt 33' is located in the member 30 and has a rubber head 33A to engage a vehicle body portion 35A by rotation in a threaded hole in the member 30.

The bracket 12 includes a further oppositely-facing U-shaped member 34, one limb 34A of which is located between the limbs of the member 30 and contains threaded holes through which the bolts 33 engage. The bolts 33 also engage through threaded holes in the other limb 30B of the member 30 which lies below the limb 34A of member 34.

It will be seen that the mounting bracket 12 provides clamping surfaces defined by the lower surface of limb 30B of member 30 and the upper surface of limb 34B of the member 34. By rotation of the bolts 33 these two surfaces are moved towards and away from each other to clamp onto a part 35 of the vehicle body. In use it is intended that the bracket 12 be clamped onto the side edge of a vehicle bonnet 35. Vehicle bonnets generally present a side edge which lies against a wing portion 35A of the vehicle and a gutter for water is defined at said edge for running off water. The bracket 12 is fitted to the side edge of the bonnet by raising the bonnet so that the side edge of part 35 is unobstructed by the wing 35A, the limb 34B of the member 34 is inserted under the edge and the limb 30B of member 30 lies over the edge.

As the bolts 33, 33' are tightened the upper and lower surfaces of limbs 34B and 30B respectively grip the side edge and the bonnet surfaces adjacent the edge to fix the bracket in position. When the bonnet is lowered to a closed position, as shown, the bridging portion of the member 34 is able to pass between the gap existing between the edge of the bonnet 35 and the wing 35 A so that once the bonnet is closed and locked it is not possible to release the bracket from the vehicle. However, it remains a simple matter for the vehicle driver to release and raise the bonnet and release the bracket. This feature is particularly advantageous when the invention is used on occasional journeys of the vehicle to countries where the vehicle is driven on the opposite side of the road to that for which the vehicle is equipped.

It will be noted that since the side edge of the bonnets of some vehicles slopes downwards in the forwards direction it may be advantageous for the mirrors 13,14 to be so angled to the vertical that the line of vision of the device is maintained in a substantially horizontal direction. For this purpose the mirror 13 and/or mirror 14 may be adjustable in angle to cater for different bonnet inclinations.

In an alternative arrangement a refracting prism may be fitted between the mirrors over one end of the assembly to deflect the image reflected by the mirrors up or down to enable the desired forward image to reach the user.

The mounting bracket may be covered with a cover 36 (as seen in Fig. 1) after fitting to the vehicle to enhance the appearance of the device.

It will be appreciated that the bracket 12 may be used to mount devices other than the described mirror assembly onto vehicles. For example, the bracket may be used for mounting a radio aerial, a luggage rack to be fixed to the boot lid, or other kinds of driver's mirror.

The mirror assembly described may be usable as a conventional rear view mirror by locating a further mirror in back to back relationship with one of the mirrors 13 and 14 and, in use, re-adjusting the position of the mirror assembly to meet with the different requirements of rear view mirrors. Alternatively one of the mirrors 13 and 14 may be formed with reflective surfaces on both sides, for the same purpose.

Referring now to Fig. 5, this shows another form of the invention.

In this case two mirrors 113 and 114 are provided having the same function and the same relationship as the mirrors 13 and 14 of the previous embodiment. The mirrors 113 and 114 are held in the desired relationship by arms 40 and 41 movable relative to one another about a vertical axis by means of a pivot 42 and each mirror being movable about a horizontal axis relative to its associated arm by means of pivots 43 and 44.

The arms 40 and 41 are mounted on a bracket 45 having an upstanding stem 46, and the bracket 45 is fixed to the vehicle in conventional manner or by means of the bracket of the previous embodiment. The light path P from an image F to the driver G is also shown in Fig. 5.

0014525

A further mirror 47 is fixed to the mirror 113 to enable the device to be used in the manner of a driver's rear view mirror in a similar manner to that described for the previous embodiment.  In such a case the mirrors 113 and 114 will be moved together by pivoting the arms 40 and 41 so that the mirrors 113 and 114 are in face to face arrangement and the mirror 47 positioned for the new viewing requirement.

0014525

- 9 -

CLAIMS

1.  A forward viewing aid for vehicle drivers characterised by two reflecting elements (13, 14; 113, 114), mounting means (16, 17; 40, 41, 46) for mounting the reflecting elements in juxtaposition relative to one another such that an image ahead of the vehicle received by one reflecting element is reflected from such element to the other reflecting element and the image can be viewed directly by the driver as a reflection from said other reflecting element.

2.  An aid according to claim 1 characterised in that the planes of the reflecting elements (13, 14; 113, 114) are arranged at an acute angle in the range 10-20$^{o}$ to each other.

3.  An aid according to claim 1 or 2 characterised in that said one reflecting element (13; 113) receiving the image has a convex reflecting surface.

4.  An aid according to claim 3 characterised in that the radius of said one element (13; 113) is in the range 1500-4000 mm.

5.  An aid according to any one of the preceding claims characterised in that said other reflecting element (14; 114) for viewing the image has a flat reflecting surface.

6.  An aid according to any one of the preceding claims characterised in that the reflecting elements (13, 14; 113, 114) are generally rectangular and are spaced apart in a direction transverse to the reflecting surfaces of the elements in overlapping relationship.

7. An aid according to any one of the preceding claims characterised in that the mounting means (16, 17; 40, 41, 46) for the reflecting elements (13, 14; 113, 114) interconnects the two reflecting elements to maintain the elements in fixed relationship to one another without obstructing the light path to the driver.

8. An aid according to claim 7 characterised by a stem (23) extending downwardly from the mounting means (16, 17) and having a mounting bracket (12) at its lower end, the mounting bracket including an upper part (30) of which a surface is arranged to engage an upwardly-facing portion (35) of a vehicle adjacent an edge of said portion, and a lower part (34) carried adjustably on the upper part and arranged to engage around said edge and under said upwardly facing portion (35), whereby the upper and lower parts are fixable on the vehicle by adjustment of the upper and lower parts to clamp the bracket on the vehicle.

9. An aid according to claim 8 characterised in that the mounting means (16, 17) is adjustable relative to the mounting bracket (12) to adjust the orientation of the reflecting elements (13, 14) relative to the vehicle driver.

10. A mounting bracket for vehicles comprising an upper part to which a device to be mounted is attachable and a lower part, characterised in that the upper part (30) has a surface arranged to engage a portion (35) of the vehicle adjacent an edge of said portion, the lower part (34) being carried on the upper part and arranged to locate around said edge to lie opposite said surface, and characterised by adjustment means (33) interconnecting the upper and lower parts (30 and 34) for effecting relative movement of the parts to clamp the parts on said portion (35) of the vehicle, the arrangement being such that the upper and lower parts are clampable around the edge of a bonnet member of the vehicle when the bonnet is raised and cannot be released with the bonnet in a lowered position.

1/2

0014525

FIG.1

FIG.2

FIG.3

FIG.4

FIG.5

0014525

European Patent Office

**EUROPEAN SEARCH REPORT**

Application number

EP 80 30 0116

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | FR - E - 32 362 / FR - A - 617 959 (BRIZARD)<br>* Whole document * | 1-3, 5-9 | B 60 R 1/10 |
| | -- | | |
| X | US - A - 2 132 026 (GRIFFITH)<br>* Claims 1,2 * | 1-4, 6,7 | |
| | -- | | |
| X | US - A - 1 666 236 (FUERTH)<br>* Whole document * | 1,3,5, 8,9 | |
| | -- | | **TECHNICAL FIELDS SEARCHED (Int.Cl. 3)** |
| X | FR - A - 2 215 337 (PERRIER)<br>* Claims 1-6 * | 1,3,5 | B 60 R |
| | -- | | |
| X | GB - A - 1 127 233 (GALLEY)<br>* Claims 2,5 * | 1 | |
| | -- | | |
| | US - A - 2 302 952 (PFEIFER)<br>* Whole document * | 1 | |
| | -- | | **CATEGORY OF CITED DOCUMENTS** |
| | AU - A - 435 481 (NUGENT)<br>* Whole document * | 1,6 | X: particularly relevant<br>A: technological background<br>O: non-written disclosure<br>P: intermediate document<br>T: theory or principle underlying the invention |
| | -- | | E: conflicting application<br>D: document cited in the application<br>L: citation for other reasons |
| | FR - A - 1 084 175 (NUERE)<br>* Whole document * | 1 | |
| | -- | | |
| | GB - A - 254 214 (FLEURIAU) | 1 ./. | |

&: member of the same patent family, corresponding document

X The present search report has been drawn up for all claims

| Place of search | Date of completion of the search | Examiner |
|---|---|---|
| The Hague | 28-04-1980 | SCHMITTER |

EPO Form 1503.1 06.78

| | EUROPEAN SEARCH REPORT | | |
|---|---|---|---|

European Patent Office

**EUROPEAN SEARCH REPORT**

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | * Whole document *<br><br>-- | | |
| | BE - A - 535 766 (BOSSON)<br>* Whole document *<br><br>-- | 1 | |
| | CH - A - 275 669 (NATHYS)<br>* Whole document *<br><br>-- | 1 | |
| | FR - A - 617 959 (BRIZARD)<br>* Whole document *<br><br>-- | 1 | TECHNICAL FIELDS SEARCHED (Int. Cl. 3) |
| | FR - E - 56 418/FR - A - 994 100 (MARIE)<br>* Whole document *<br><br>---- | 1 | |